# EUROPEAN PATENT SPECIFICATION

(11) **EP 3 636 950 B1**
(45) Date of publication and mention of the grant of the patent: **16.11.2022**
(21) Application number: 19197765.1
(22) Date of filing: 17.09.2019
(51) Int. Cl.: F16F 1/387, F16F 1/393, B61F 3/16

(54) **METHOD FOR INCREASING AXIAL STIFFNESS, REDUCING RADIAL AND DEFLECTION STIFFNESS OF ELASTIC COMPOUNDED COMPONENT**
VERFAHREN ZUR ERHÖHUNG DER AXIALEN STEIFHEIT, VERRINGERUNG DER RADIAL- UND BIEGESTEIFIGKEIT EINES ELASTISCHEN VERBUNDBAUTEILS
PROCÉDÉ POUR AUGMENTER LA RIGIDITÉ AXIALE, RÉDUIRE LA RIGIDITÉ RADIALE ET DE FLEXION D'UN COMPOSANT ÉLASTIQUE COMPOSÉ

(30) Priority: 08.10.2018 CN 201811167613
(43) Date of publication of application: 15.04.2020
(73) Proprietor: Zhuzhou Times New Material Technology Co., Ltd., Zhuzhou, Hunan 412007 (CN)
(72) Inventor: ZHANG, Yuxiang, Zhuzhou, Hunan, 412007 (CN); LIU, Wensong, Zhuzhou, Hunan, 412007 (CN); FENG, Wansheng, Zhuzhou, Hunan, 412007 (CN); HUANG, Youjian, Zhuzhou, Hunan, 412007 (CN); HUANG, Jiangbiao, Zhuzhou, Hunan, 412007 (CN); LUO, Jun, Zhuzhou, Hunan, 412007 (CN); JIANG, Zhongsan, Zhuzhou, Hunan, 412007 (CN); CHEN, Junhui, Zhuzhou, Hunan, 412007 (CN); ZENG, Xianhui, Zhuzhou, Hunan, 412007 (CN)
(74) Representative: Güclü, Ilyas

(56) References cited:
- EP-A1- 2 662 591
- EP-A2- 1 803 604
- US-A- 5 641 153

## Description

### Technical Field

The present invention relates to a method to reduce and isolate vibration, and particularly to a method for increasing axial stiffness, reducing radial and deflection stiffness of an elastic compounded component for a rail vehicle. An elastic compounded component which can effectively increase the comprehensive performance of the vibration reduction and isolation in all directions, and increase axial stiffness, reduce radial and deflection stiffness of the elastic compounded component, thereby meeting the vibration reduction and isolation requirements in various complicated operating conditions. The present invention belongs to the technical field of rail transit manufacturing.

### Background

With the continuous development of modern rail transit technology, the running speed of a rail vehicles is getting higher and higher, which makes the requirements for the operational performance of the whole rail vehicles higher and higher, accordingly, makes the requirements for elastic components used in these vehicles higher and higher. At present, as the speed of the rail vehicles is getting higher and higher, a high-speed train suffers large vibration and impact under a high-speed operation condition. Thus, the loading capability and safety factor of each elastic component of the trains are required to be higher and higher, especially when the complicated operating condition of the high-speed train is encountered, the anti-bending and anti-shearing capabilities in all directions are required to be higher. There are many situations, for example, an elastic component for an independent wheel bogie is required with high axial stiffness, low radial and deflection stiffness. Due to structural limitations, the existing elastic components are prone to fatigue when used in these operating conditions, so there is an urgent need to make improvement, and find a method to increase the axial stiffness, reduction in radial and deflection stiffness of the elastic compounded component.

Through patent and literature search, no patent literature report of the same technology as the present invention is found, and patents and papers that have a certain relationship with the present invention mainly include the following ones:
Patent for utility model of which the patent application number is CN200820132281.6, the title is motor hanger, and the applicants are Transportation Bureau of Ministry of Railways; Yongji Xinshisu Electric Equipment Co., Ltd.: the patent discloses a motor hanger, comprising two studs fixed to a motor base, wherein a clamping plate is fixed between the two studs, and a diagonal bracing plate respectively fixed to the studs and the motor base is additionally arranged between the two studs. The additionally arranged diagonal bracing plate forms stable triangular support for the studs, reduces the stress on the studs, and increases the loading capability and safety factor of the hanger.
2. Patent for invention of which the patent number is CN201810127687.3, the title is rubber-metal compounded spherical hinge with axial nonlinear variable stiffness, and the applicant is Zhuzhou Times New Material Technology Co., Ltd.: the patent discloses a rubber-metal compounded spherical hinge with axial nonlinear variable stiffness, made by compounding rubber and metal material, comprising a sleeve, wherein a rubber-metal vulcanization subcomponent made by compounding rubber and metal material is pressed in the sleeve through interference fit, an axial variable stiffness adjustment device is contained in the rubber-metal vulcanization subcomponent, and the axial stiffness of the rubber-metal compounded spherical hinge is adjusted by the axial variable stiffness adjustment device, so that the axial stiffness of the whole rubber-metal compounded spherical hinge is nonlinearly changed. The axial variable stiffness adjustment device is divided into two parts, i.e. a variable stiffness adjustment device with axial low stiffness as one part, a nonlinear variable stiffness adjustment device with axial high stiffness as the other part, and the nonlinear variable stiffness adjustment of the whole spherical hinge is realized by combining the two parts.
3. Patent for invention of which the patent number is CN201810127686.9, the title is method for adjusting nonlinear variable stiffness of rubber-metal compounded spherical hinge, and the applicant is Zhuzhou Times New Material Technology Co., Ltd. : the patent discloses a method for adjusting nonlinear variable stiffness of a rubber-metal compounded spherical hinge, comprising: adjusting nonlinear variable stiffness of the rubber-metal compounded spherical hinge by adjusting a position relationship between a metal component and a rubber component of the rubber-metal compounded spherical hinge, wherein adjusting nonlinear variable stiffness of the rubber-metal compounded spherical hinge by adjusting a position relationship between a metal component and a rubber component of the rubber-metal compounded spherical hinge is performed by adjusting the axial stiffness of the rubber-metal compounded spherical hinge, so that the axial stiffness of the whole rubber-metal compounded spherical hinge is nonlinearly changed; and adjusting the nonlinear variable stiffness of the rubber-metal compounded spherical hinge through the nonlinear change of the axial stiffness of the rubber-metal compounded spherical hinge.
4. EP 1803604 A2 discloses a railway bogie provided with two cross-members for supporting a linear induction motor, mounted on the axle boxes by means of resilient mounting means allowing limited pivoting movement of each cross-member about a horizontal transversal axis of rotation. A system of five links is used to connect the linear induction motor to the cross-members. The links are located in such a way that the resultant of the vertical forces transmitted by the linear induction motor to each cross-member is located at a first center position on the first transversal axis equidistant from the axle boxes. The mounting means are further provided with height adjusters that allow to adjust the height and cross level position of the linear induction motor.

Through careful analysis performed on these patents, although these patents all relate to elastic components and propose some improved technical solutions, through careful analysis, the structures of the elastic components in these patents still have some limitations, mainly because there are only two free surfaces in terms of the degree of freedom of an elastic material. In this way, the comprehensive vibration reduction and isolation effect of the elastic component is limited, especially for the operating condition where there is a need to increase axial stiffness, reduce radial and deflection stiffness of the elastic compounded component, it is difficult to meet the requirements, and further research is needed.

### Summary

An object of the present invention is to propose a novel method for increasing axial stiffness, reducing radial and deflection stiffness of an elastic compounded component aiming at the problem that it is difficult for the existing method to designing a elastic component to be applicable to various more severe loading conditions, especially the existing elastic components cannot meet the requirements of an extremely high axial stiffness, but very soft radial and deflection stiffness. The method for increasing axial stiffness, reducing radial and deflection stiffness of an elastic compounded component can substantially increase axial stiffness, reduce the radial and deflection stiffness of the elastic compounded component, increase the comprehensive vibration reduction and isolation performance of a motor suspension system, effectively meet the requirement of a motor suspension system of a high-speed train.

To achieve the object, the present invention provides a method for increasing axial stiffness, reducing radial and deflection stiffness of an elastic compounded component, which can increase axial stiffness and reduce radial and deflection stiffness of the elastic compounded component by method of applying an axial precompression and a suspended load bearing structure of an elastic component with multiple free surfaces, wherein the elastic subcomponent with multiple free surfaces is a compounded component of an elastic material and metallic components, the elastic subcomponent has three free surfaces after being compounded, so that the stress of the elastic subcomponent in all directions is substantially reduced, and the fatigue life of the elastic subcomponent is prolonged; the axial precompression means that the elastic subcomponent is always in an axial compressed state while they are working, so that the axial stiffness is substantially increased; the suspended bearing structure means that at least one of the metallic components of the elastic subcomponent is in a suspended state while they are working, so that the metallic component does not bear the load in radial direction on one hand, and thus the elastic material at this position is in a shearing state completely and only provide very little radial and deflection stiffness, on the other hand, the suspended metallic component will bear the load in axial direction and make great contribution to axial stiffness, thereby increasing axial stiffness, reducing radial and deflection stiffness of the elastic compounded component.

Further, the elastic material of the elastic compounded component have three free surfaces, and all the free surfaces are at different angles and positions, to guarantee that stress is released when the elastic material component is stressed in multiple directions.

Further, the elastic subcomponents has three free surfaces, wherein the first free surface is an outer free surface in the outer diameter direction formed by the gap formed by combining the metallic outer ring and the metallic side ring, the second free surface is an inner free surface in the inner diameter direction formed by the gap formed by combining the metallic side ring and the metallic inner ring, and third free surface is an inclined free surface in inclined angle direction formed by the gap formed by combining the metallic inner ring and the metallic outer ring.

Further, the section of the elastic subcomponent from the inclined free surface to the inner free surface is a spherical structure, and forms a spherical elastic compounded together with the metallic outer ring, the metallic inner ring and the metallic side ring, therefore, can substantially reducing deflection stiffness.

Further, the elastic subcomponent structure between the inclined free surface, the inner free surface and the outer free surface is a Y-shaped elastic structure, to meet the requirements of rigid axial stiffness, soft radial stiffness of an elastic components in various bogie systems.

Further, the axially pre-compressed and elastic compounded component is formed by combining two elastic subcomponents, the two elastic subcomponents are axially pre-compressed and clamped on a bogie from both sides of the bogie, and are axially pre-compressed and combined together by a fastening system, to form the axially pre-compressed elastic compounded component.

Further, the axial metallic sleeve penetrates through the inner holes of the two elastic subcomponents, a retaining shaft shoulder is arranged at one end of the axial metallic sleeve, the retaining shaft shoulder is just match with the inner hole of the metallic side ring of one elastic subcomponent, a gap is formed between the axial metallic sleeve and the inner ring of the elastic subcomponent, so that the side ring of the elastic component and the locomotive motor are fixed when the elastic component is radially loaded, the load is acted on the inner ring of the elastic component connected with a screw rod, and the outer ring of the elastic subcomponent does not bear load, forming a suspended state; the other end of the axial sleeve is connected with the end metallic cover, and is inserted in a positioning inner hole of the end cover; the metallic outer ring of the positioning inner hole of the end cover is provided with a positioning lug boss, and the positioning lug boss is inserted in the inner hole of the metallic side ring of the other elastic subcomponent, to position the elastic component; a gap is also formed between the axial metallic sleeve and the metallic inner ring of the other elastic subcomponent, so that the metallic side ring of the elastic component and the locomotive motor are fixed when the elastic component is radially loaded, the load is acted on the inner ring of the elastic component connected with a screw rod, and the outer ring of the elastic component does not bear load, forming a suspended state too; the fastener penetrates through the inner hole of the end cover, through the inner hole of the axial sleeve and then is connected with a connection screw hole in the bogie, and axially compresses the two elastic components simultaneously during compaction of the end cover, forming suspended hangers of the two elastic components.

Further, elastic subcomponent is made of rubber material, and the rubber material is compounded with the metallic component together by integral vulcanization, forming a rubber-metal compounded component.

Further, the elastic subcomponent is made of nylon or polyester elastic material, and the nylon or polyester elastic material is compounded with the metallic outer ring, the metallic inner ring and the metallic side ring together, forming an elastic material compounded component.

The present invention has the advantages that:
By adopting the structural designing of an elastic subcomponent with multiple free surfaces, the present invention can make the compression of the elastic material in all directions have stress release points, can substantially reduce rubber stress and increase the fatigue life of the elastic component, and can substantially increase axial stiffness, reduce radial and deflection stiffness by adjusting the shape and structure of each component and elastic subcomponent.

The present invention has the following advantages:
1. The present invention can dramatically increase axial stiffness, reduce radial and deflection stiffness and substantially reduce deflection stiffness by a suspended type and axial precompression combination structure;
2. suspended and axial precompression combinations of the present invention are hung on both sides of a mounting seat of a crossbeam of the bogies, so that the rail vehicles motor can be more securely hung on the bogie with a better stability;
3. The present invention can effectively realize stress release in all directions, and reduce stress of elastic material by the suspended and axial precompression combinations structure and the design of multiple free surfaces of the elastic component;
4. The present invention can realize various stiffness matching properties in four directions of radial, axial, deflection and torsional by adjusting the structure of each free surface, reach a unique ratio of four direction stiffness matching of radial stiffness: axial stiffness: deflection stiffness: torsional stiffness be 7:100:300:100, and meet the requirements of various load bearing function of rail vehicles;
5. The elastic component of the present invention internally adopts an encapsulation design to realize self-anti-corrosion and radial self-anti-shock;
6. Applying this method and working principle of the present invention to the motor suspension system can fully meet the requirements of motor suspension system of various high-speed trains;
7. In the present invention, rubber is filled and vulcanized integrally by means of the rubber filling holes of the metal side ring when manufacturing the rubber subcomponent, thereby effectively realizing rubber filling and positioning of the product in a mould.

### Description of Drawings

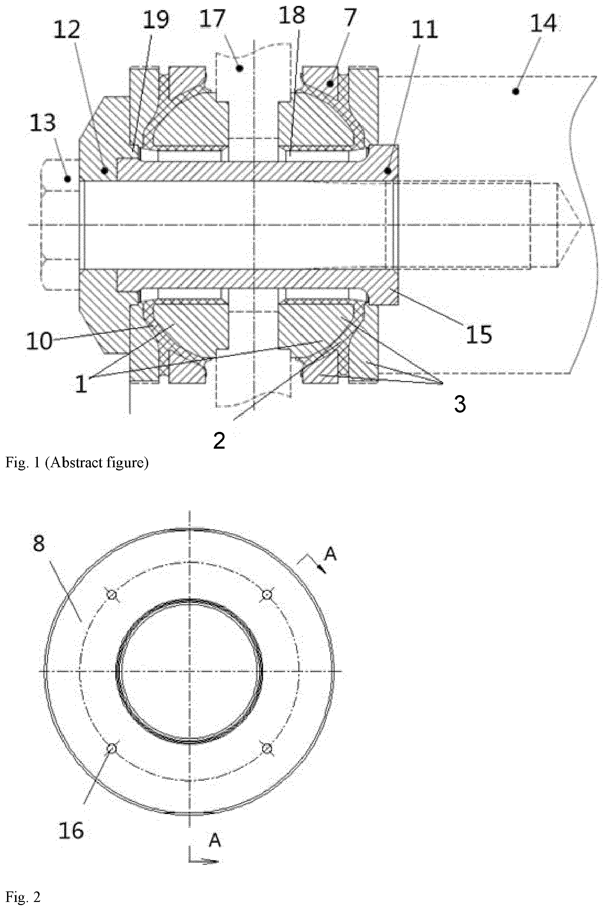

Fig. 1 is an overall structural schematic diagram of an embodiment of the present invention;
Fig. 2 is a structural schematic diagram of an elastic subcomponent of an embodiment of the present invention;
Fig. 3 is a side cross-sectional view;
Fig. 4 is a curve chart of radial stiffness of an embodiment; and
Fig. 5 is a curve chart of axial stiffness of an embodiment.

### Detailed Description

The present invention is further described below in combination with the drawings and the specific embodiments.

### Embodiment 1

As shown in the drawing, the present invention relates to a method for increasing axial stiffness, reducing radial and deflection stiffness of an elastic compounded component, which can increase axial stiffness and reduce radial and deflection stiffness of the elastic compounded component by axial precompression and suspended load bearing structure of elastic subcomponents 1 with multiple free surfaces, wherein the elastic subcomponents 1 with multiple free surfaces is a compounded component of an elastic material 2 and metal components 3, the elastic material 2 has three or more free surfaces after being compounded, so that the stress of the elastic material in all directions is substantially reduced, and the fatigue life of the elastic subcomponents is prolonged; the axial precompression means that the elastic subcomponents 1 are always in an axial compressed state while they are working, so that the axial stiffness is substantially increased; the suspended bearing structure means that at least one of the metallic component 3 of the elastic subcomponent 1 is in a suspended state while they are working, so that the metallic component 3 does not bear the load in radial direction on one hand, and thus the elastic material 2 at this position is in a shearing state completely and only provide very little radial and deflection stiffness, on the other hand, the suspended metallic component 3 will bear the load in axial direction and make great contribution to axial stiffness, thereby increasing axial stiffness, reducing radial and deflection stiffness of the elastic compounded component.

Further, the elastic subcomponents 2 of the elastic compounded component has three free surfaces, and all the free surfaces are at different angles and positions, to guarantee that stress is released when the elastic material component is stressed in multiple directions.

Further, the metal component 3 comprises a metallic outer ring 7, a metallic side ring 8 and a metallic inner ring 9, the three free surfaces of the elastic subcomponents 2 are formed by gaps formed by combining the metallic outer ring 7, the metallic side ring 8 and the metallic inner ring 9, wherein one is an outer free surface 4 in the outer diameter direction formed by a gap formed by combining the metallic outer ring 7 and the metallic side ring 8, the other one is an inner free surface 5 in the inner diameter direction formed by a gap formed by combining the metallic side ring 8 and the metallic inner ring 9, and another one is an inclined free surface 6 in inclined angle direction formed by a gap formed by combining the metallic inner ring 9 and the metallic outer ring 7.

Further, an elastic subcomponent section from the inclined free surface 6 to the inner free surface 5 is an elastic subcomponent section 10 of a spherical structure, and forms a spherical elastic compounded component together with the metallic outer ring 7, the metallic inner ring 9 and the metallic side ring 8, substantially reducing deflection stiffness.

Further, the inclined free surface 6 is connected with the elastic subcomponent 2 formed by combining the inner free surface 5 and the outer free surface 4 to form a Y-shaped elastic subcomponent structure, to meet the requirements of rigid axial stiffness, soft radial stiffness of an elastic components in various bogie systems.

Further, the axially-precompressed and combined elastic component is formed by combing two elastic components 1 with multiple free surfaces; the two elastic components 1 with multiple free surfaces are axially precompressed and clamped on a bogie 17 from both sides of the bogie 17, and are axially precompressed and combined together by a fastening system 13, to form the axially-precompressed and combined elastic component.

Further, the suspended loading means that the two elastic components of a suspended combined elastic component are combined by an axial metallic sleeve 11 and a metallic end cover 12, then assembled by the fastener 13, and then fastened together with a rail vehicles motor 14 to form the suspended combined elastic component.

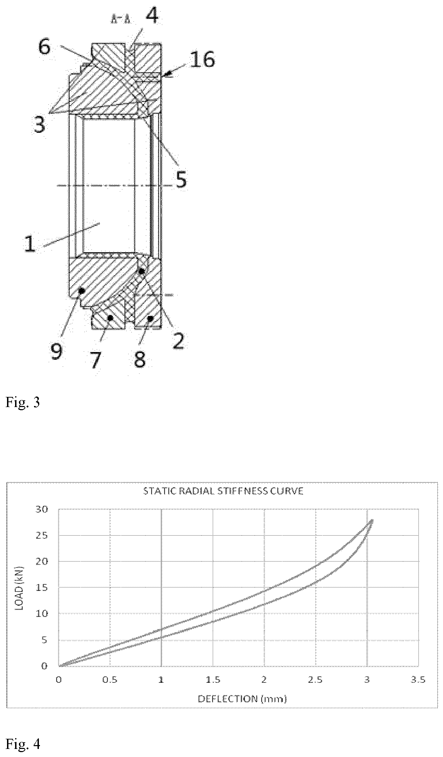

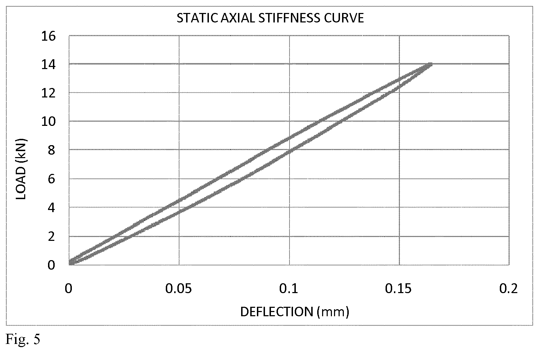

Further, the axial metallic sleeve 11 penetrates through the inner holes of the two elastic subcomponents, a retaining shaft shoulder 15 is arranged at one end of the axial metallic sleeve 11, the retaining shaft shoulder 15 is just match with the inner hole of the side ring of one elastic subcomponent 1 with multiple free surfaces, a gap 18 is formed between the axial metallic sleeve 11 and the inner ring of the elastic component, so that the metal side ring 8 of the elastic component 1 with multiple free surfaces and the rail vehicles motor 14 are fixed when the elastic subcomponent 1 with multiple free surfaces is radially loaded, the load is acted on the metallic inner ring 9 of the elastic component connected with a screw rod, and the metallic outer ring 7 of the elastic component does not bear, forming a suspended state of an elastic component; the other end of the axial metallic sleeve 11 is connected with the end metallic cover 12, and is inserted in a positioning inner hole of the end cover 12; the outer metallic ring of the positioning inner hole of the end metallic cover 12 is provided with a positioning lug boss 19, and the positioning lug boss 19 is inserted in the inner hole of the of metallic side ring 8 of the other elastic component, to position the elastic component 1 with multiple free surfaces; a gap is also formed between the axial metallic sleeve 11 and the inner metallic ring of the other elastic component 1 with multiple free surfaces, so that the metallic side ring 8 of the elastic component and the rail vehicles motor are fixed when the elastic component is radially loaded, the load is acted on the metallic inner ring 9 of the elastic component connected with a screw rod, and the metallic outer ring 7 of the elastic component does not bear, forming a suspended state of an elastic component; the fastener 13 penetrates through the inner hole of the end cover 12, penetrates through the inner hole of the axial sleeve and then is connected with a connection screw hole in the damping component in a fastening mode, and axially compresses the two elastic components simultaneously through the end cover 12 during compaction, forming suspended hangers of the two elastic components 1 with multiple free surfaces; the radial stiffness curve of the loading and unloading of the elastic component 1 with multiple free surfaces is shown in Fig. 4, and the axial stiffness curve of the loading and unloading of the elastic component 1 with multiple free surfaces is shown in Fig. 5. As shown in the Fig., the radial stiffness curve of the loading and unloading of the elastic component 1 with multiple free surfaces of the present invention is substantially reduced, while the axial stiffness curve of the loading and unloading of the elastic component 1 with multiple free surfaces is substantially increased.

Further, the elastic subcomponent 2 of the elastic component 1 with multiple free surfaces is made of rubber material, and the rubber material is compounded with the metallic components together by integral vulcanization, forming a rubber-metal component.

Further, the metal side ring 8 is provided with rubber filling holes 16, and rubber is filled through the rubber filling holes 16 of the metallic side ring 8 when manufacturing the rubber component, thereby realizing rubber filling and positioning of the rubber component in a mould during integral vulcanization. The rubber filling holes 16 are 3-8 in number, and are uniformly distributed, guaranteeing rubber filling uniformity.

### Embodiment 2

Embodiment 2 is identical to embodiment 1 in principle, and is only slightly different from embodiment 1 in structure. The present invention relates to a method for increasing axial stiffness, reducing radial and deflection stiffness of an elastic compounded component, which can increase axial stiffness, reduce radial and deflection stiffness of the elastic compounded component by axial precompression and suspended load bearing structure of elastic subcomponents with multiple free surfaces, wherein the elastic subcomponent with multiple free surfaces is a compounded elastic component of elastic material and metallic components, the elastic subcomponents has three or more free surfaces after being compounded, so that the stress of the elastic subcomponents in all directions is substantially reduced, and the fatigue life of the elastic subcomponents is prolonged; the axial precompression means that the elastic subcomponents are always in an axial compressed state while they are working, so that the axial stiffness is substantially increased; the suspended bearing structure means that at least one of the metallic component of the elastic subcomponent is in a suspended state while they are working, so that the metallic component does not bear the load in radial direction on one hand, and thus the elastic material at this position is in a shearing state completely and only provide very little radial and deflection stiffness, on the other hand, the suspended metallic component will bear the load in axial direction and make great contribution to axial stiffness, thereby increasing axial stiffness, reducing radial and deflection stiffness of the elastic compounded component..

Further, the elastic subcomponents of the compounded elastic component have three or more free surfaces, and all the free surfaces are at different angles and positions, to guarantee that stress is released when the elastic material component is stressed in multiple directions.

Further, the axially pre-compressed and elastic compounded component is formed by combining two elastic subcomponents; the two elastic subcomponents are axially pre-compressed and clamped on a bogie from both sides of the bogie, and are axially pre-compressed and combined together by a fastening system, to form the axially pre-compressed elastic compounded component.

Further, the suspended loading means that the two elastic subcomponents with the suspended load bearing structure are combined by an axial metallic sleeve and an end metallic cover, then assemble all the parts by the fastening system, and fastened them together to a locomotive motor to form the elastic compounded component.

Further, the axial sleeve metallic sleeve penetrates through the inner holes of the two elastic subcomponents, a retaining shaft shoulder is arranged at one end of the axial metallic sleeve, the retaining shaft shoulder is just match with the inner hole of the metallic side ring of one elastic subcomponent, a gap is formed between the axial metallic sleeve and the inner ring of the elastic subcomponent, so that the side ring of the elastic component and the locomotive motor are fixed when the elastic component is radially loaded, the load is acted on the inner ring of the elastic component connected with a screw rod, and the outer ring of the elastic subcomponent does not bear load, forming a suspended state; the other end of the axial sleeve is connected with the end metallic cover, and is inserted in a positioning inner hole of the end cover; the metallic outer ring of the positioning inner hole of the end cover is provided with a positioning lug boss, and the positioning lug boss is inserted in the inner hole of the metallic side ring of the other elastic subcomponent, to position the elastic component; a gap is also formed between the axial metallic sleeve and the metallic inner ring of the other elastic subcomponent, so that the metallic side ring of the elastic component and the locomotive motor are fixed when the elastic component is radially loaded, the load is acted on the inner ring of the elastic component connected with a screw rod, and the outer ring of the elastic component does not bear load, forming a suspended state too; the fastener penetrates through the inner hole of the end cover, through the inner hole of the axial sleeve and then is connected with a connection screw hole in the bogie, and axially compresses the two elastic components simultaneously during compaction of the end cover, forming suspended hangers of the two elastic components.

The elastic subcomponent of the elastic compounded component has more than three free surfaces, and all the free surfaces are at different angles and positions, to guarantee that stress is released when the elastic material is stressed in multiple directions.

The elastic component is a compounded elastic component formed by compounding nylon material and metal, and the nylon elastic subcomponent of the elastic component is an elastic subcomponent with multiple free surfaces.

The above described embodiments only clearly and completely describe the technical solution of the present invention in combination with drawings. Apparently, the described embodiments are merely part of the embodiments of the present invention, not all of the embodiments. Based on the embodiments in the present invention, all other embodiments obtained by those ordinary skilled in the art without contributing creative labor will belong to the protection scope of the present invention.

The present invention has the advantages that:
By adopting the structural design of an elastic subcomponent with multiple free surfaces, the present invention can make the compression of the elastic subcomponent in all directions have stress release points, can substantially reduce rubber stress and increase the fatigue life of the elastic component, and can substantially increase axial stiffness, reduce radial and deflection stiffness by adjusting the shape and structure of each component and elastic subcomponent.

The present invention has the following advantages:
1. The present invention can increase axial stiffness, reduce radial and deflection stiffness and substantially reduce deflection stiffness by a suspended and axial precompression combination structure;
2. suspended and axial precompression combinations of the present invention are hung on both sides of a mounting seat of a crossbeam of the bogie, so that the rail vehicles' motor can be more securely hung on the bogie with a better stability;
3. The present invention can effectively realize stress release in all directions and reduce rubber stress by the suspension and axial precompression combinations and the design of multiple free surfaces of the elastic component;
4. The present invention can realize unique stiffness matching properties in four directions of radial, axial deflection and torsional by adjusting the structure of each free surface, reach a unique ratio of stiffness of radial stiffness: axial stiffness: deflection stiffness to be 7:100:300:100, and meet the requirements of various load conditions of rail vehicles;
5. The elastic component of the present invention internally adopts an encapsulation design to realize self-anti-corrosion and radial self-anti-shock;
6. Applying the principle of the present invention to the motor hanger can fully meet the requirements of motor suspension systems of various high-speed trains;
7. In the present invention, rubber is filled and vulcanized integrally by means of the rubber filling holes of the metal side ring when manufacturing the rubber component, thereby effectively realizing rubber filling and positioning of the product in a mould.

## Claims

1. A method for increasing axial stiffness, reducing radial and deflection stiffness of an elastic compounded component, wherein increasing axial stiffness, reducing radial and deflection stiffness of the elastic compounded component is achieved by axial precompression and suspended load bearing structure of elastic subcomponents (1) with multiple free surfaces, wherein the elastic subcomponent (1) with multiple free surfaces is a compounded elastic component of an elastic material (2) and metallic components (3), wherein the elastic subcomponent (1) has three free surfaces after being compounded, wherein all the free surfaces are at different angles and positions to guarantee that stress is released when the elastic material subcomponent (1) is stressed in multiple directions, so that the stress of the elastic subcomponents (1) in all directions is substantially reduced, and the fatigue life of the elastic subcomponents (1) is prolonged; the axial precompression means that the elastic subcomponents (1) are always in an axial compressed state while they are working, so that the axial stiffness is substantially increased; the suspended bearing structure means that at least one of the metallic components (3) of the elastic subcomponent (1) is in a suspended state while they are working, so that the metallic component (3) does not bear the load in radial direction on one hand, and thus the elastic material (2) at this position is in a shearing state completely and only provide very little radial and deflection stiffness, on the other hand, the suspended metallic component (3) will bear the load in axial direction and make great contribution to axial stiffness, thereby increasing axial stiffness, reducing radial and deflection stiffness of the elastic compounded component, **characterized in that** the three free surfaces of the elastic subcomponents (1) are formed by gaps formed by combining a metallic outer ring (7), a metallic side ring (8) and a metallic inner ring (9); wherein the first free surface is an outer free surface (4) in the outer diameter direction formed by the gap formed by combining the metallic outer ring (7) and the metallic side ring (8), the second free surface is an inner free surface (5) in the inner diameter direction formed by the gap formed by combining the metallic side ring (8) and the metallic inner ring (9), and third free surface is an inclined free surface (6) in inclined angle direction formed by the gap formed by combining the metallic inner ring (9) and the metallic outer ring (7).

2. The method for increasing axial stiffness, reducing radial and deflection stiffness of an elastic compounded component according claim 1, **characterized in that** the section of the elastic subcomponent (1) from the inclined free surface (6) to the inner free surface (5) is a spherical structure, and forms a spherical elastic compounded together with the metallic outer ring (7), the metallic inner ring (9) and the metallic side ring (8), therefore, can substantially reducing deflection stiffness.

3. The method for increasing axial stiffness and reducing radial and deflection stiffness of an elastic compounded component according claim 1, **characterized in that** the elastic material (2) structure between the inclined free surface (6) , the inner free surface (5) and the outer free surface (4) is a Y-shaped elastic structure, to meet the requirements of rigid axial stiffness, soft radial stiffness of an elastic components in various bogie systems.

4. The method for increasing axial stiffness and reducing radial and deflection stiffness of an elastic compounded component according claim 1, **characterized in that** the axially pre-compressed and elastic compounded component is formed by combining two elastic subcomponents (1); the two elastic subcomponents (1) are axially pre-compressed and clamped on a bogie (17) from both sides of the bogie (17), and are axially pre-compressed and combined together by a fastening system (13), to form the axially pre-compressed elastic compounded component.

5. The method for increasing axial stiffness, reducing radial and deflection stiffness of an elastic compounded component according claim 1, **characterized in that** the suspended load bearing means that the two elastic subcomponents (1) with the suspended load bearing structure are combined by an axial metallic sleeve (11) and an end metallic cover (12), then assemble all the parts by the fastening system (13), and fastened them together to a locomotive motor (14) to form the elastic compounded component.

6. The method for increasing axial stiffness, reducing radial and deflection stiffness of an elastic compounded component according claim 5, **characterized in that** the axial metallic sleeve (11) penetrates through the inner holes of the two elastic subcomponents (1), a retaining shaft shoulder (15) is arranged at one end of the axial metallic sleeve (11), the retaining shaft shoulder (15) is just match with the inner hole of the metallic side ring (8) of one elastic subcomponent (1), a gap (18) is formed between the axial metallic sleeve (11) and the inner ring of the elastic subcomponent (1), so that the side ring (8) of the elastic component and the locomotive motor (14) are fixed when the elastic component is radially loaded, the load is acted on the inner ring (9) of the elastic component connected with a screw rod, and the outer ring (7) of the elastic subcomponent (1) does not bear load, forming a suspended state; the other end of the axial metallic sleeve (11) is connected with the end metallic cover (12), and is inserted in a positioning inner hole of the end cover (12); the metallic outer ring (7) of the positioning inner hole of the end cover (12) is provided with a positioning lug boss (19), and the positioning lug boss (19) is inserted in the inner hole of the metallic side ring (8) of the other elastic subcomponent (1), to position the elastic component ; a gap is also formed between the axial metallic sleeve (11) and the metallic inner ring of the other elastic subcomponent (1), so that the metallic side ring (8) of the elastic component and the locomotive motor (14) are fixed when the elastic component is radially loaded, the load is acted on the inner ring (9) of the elastic component connected with a screw rod, and the outer ring (7) of the elastic component does not bear load, forming a suspended state too; the fastening system (13) penetrates through the inner hole of the end cover (12), through the inner hole of the axial sleeve and then is connected with a connection screw hole in a bogie (17), and axially compresses the two elastic components simultaneously during compaction of the end cover (12), forming suspended hangers of the two elastic components .

7. The method for increasing axial stiffness, reducing radial and deflection stiffness of an elastic compounded component according claim 1, **characterized in that** the elastic subcomponent (1) is made of rubber material, and the rubber material is compounded with the metallic component (3) together by integral vulcanization, forming a rubber-metal material compounded component

8. The method for increasing axial stiffness, reducing radial and deflection stiffness of an elastic compounded component according claim 1, **characterized in that** the elastic subcomponent (1) is made of nylon or polyester elastic material, and the nylon or polyester elastic material is compounded with the metallic outer ring (7), the metallic inner ring (9) and the metallic side ring (8) together, forming an elastic material compounded component.

## Patentansprüche

1. Verfahren zur Erhöhung der axialen Steifigkeit und zur Verringerung der radialen Steifigkeit und der Durchbiegungssteifigkeit eines elastischen Verbundbauteils, wobei die Erhöhung der axialen Steifigkeit und die Verringerung der radialen Steifigkeit und der Durchbiegungssteifigkeit des elastischen Verbundbauteils durch eine axiale Vorkompression und eine aufgehängte lasttragende Struktur von elastischen Teilbauteilen (1) mit mehreren freien Oberflächen erreicht wird, wobei das elastische Teilbauteil (1) mit mehreren freien Oberflächen ein elastisches Verbundbauteil aus einem elastischen Material (2) und metallischen Komponenten (3) ist, wobei das elastische Teilbauteil (1) nach dem Zusammensetzen drei freie Oberflächen aufweist, wobei alle freien Oberflächen unterschiedliche Winkel und Positionen aufweisen, um zu gewährleisten, dass die Spannung freigesetzt wird, wenn das Teilbauteil (1) aus elastischem Material in mehreren Richtungen beansprucht wird, so dass die Spannung der elastischen Teilbauteile (1) in allen Richtungen wesentlich reduziert wird und die Ermüdungslebensdauer der elastischen Teilbauteile (1) verlängert wird; die axiale Vorkompression bedeutet, dass die elastischen Teilkomponenten (1) immer in einem axial komprimierten Zustand sind, während sie arbeiten, so dass die axiale Steifigkeit wesentlich erhöht wird; die hängende Lagerstruktur bedeutet, dass mindestens eine der metallischen Komponenten (3) der elastischen Teilkomponente (1) in einem hängenden Zustand ist, während sie arbeiten, so dass die metallische Komponente (3) einerseits die Last in radialer Richtung nicht trägt und somit das elastische Material (2) an dieser Position vollständig in einem Scherzustand ist und andererseits nur eine sehr geringe radiale und Biegesteifigkeit bietet, die aufgehängte metallische Komponente (3) die Last in axialer Richtung trägt und einen großen Beitrag zur axialen Steifigkeit leistet, wodurch die axiale Steifigkeit erhöht und die radiale und Biegesteifigkeit der elastischen Verbundkomponente verringert wird, **dadurch gekennzeichnet, dass** die drei freien Oberflächen der elastischen Teilkomponenten (1) durch Spalten gebildet werden, die durch Kombination eines metallischen Außenrings (7), eines metallischen Seitenrings (8) und eines metallischen Innenrings (9) gebildet werden; wobei die erste freie Fläche eine äußere freie Fläche (4) in der Richtung des Außendurchmessers ist, die durch den Spalt gebildet wird, der durch die Kombination des metallischen Außenrings (7) und des metallischen Seitenrings (8) gebildet wird, die zweite freie Fläche eine innere freie Fläche (5) in der Richtung des Innendurchmessers ist, die durch den Spalt gebildet wird, der durch die Kombination des metallischen Seitenrings (8) und des metallischen Innenrings (9) gebildet wird, und die dritte freie Fläche eine geneigte freie Fläche (6) in der Richtung des geneigten Winkels ist, die durch den Spalt gebildet wird, der durch die Kombination des metallischen Innenrings (9) und des metallischen Außenrings (7) gebildet wird.

2. Verfahren zur Erhöhung der axialen Steifigkeit, zur Verringerung der radialen Steifigkeit und zur Verringerung der Durchbiegungssteifigkeit eines elastischen Verbundbauteils nach Anspruch 1, **dadurch gekennzeichnet, dass** der Abschnitt des elastischen Teilbauteils (1) von der geneigten freien Fläche (6) bis zur inneren freien Fläche (5) eine kugelförmige Struktur ist und zusammen mit dem metallischen Außenring (7), dem metallischen Innenring (9) und dem metallischen Seitenring (8) einen kugelförmigen elastischen Verbund bildet, so dass die Durchbiegungssteifigkeit wesentlich verringert werden kann.

3. Verfahren zur Erhöhung der axialen Steifigkeit und zur Verringerung der radialen Steifigkeit und der Durchbiegungssteifigkeit eines elastischen Verbundbauteils nach Anspruch 1, **dadurch gekennzeichnet, dass** die Struktur des elastischen Materials (2) zwischen der geneigten freien Fläche (6), der inneren freien Fläche (5) und der äußeren freien Fläche (4) eine Y-förmige elastische Struktur ist, um die Anforderungen an eine steife axiale Steifigkeit und eine weiche radiale Steifigkeit eines elastischen Bauteils in verschiedenen Drehgestellsystemen zu erfüllen.

4. Verfahren zur Erhöhung der axialen Steifigkeit und zur Verringerung der Radial- und Biegesteifigkeit eines elastischen Verbundbauteils nach Anspruch 1, **dadurch gekennzeichnet, dass** das axial vorverdichtete und elastische Verbundbauteil durch Kombinieren von zwei elastischen Teilbauteilen (1) gebildet wird; die beiden elastischen Teilbauteile (1) werden axial vorverdichtet und von beiden Seiten des Drehgestells (17) auf ein Drehgestell (17) geklemmt und durch ein Befestigungssystem (13) axial vorverdichtet und miteinander kombiniert, um das axial vorverdichtete elastische Verbundbauteil zu bilden.

5. Verfahren zur Erhöhung der axialen Steifigkeit, zur Verringerung der radialen Steifigkeit und der Durchbiegungssteifigkeit eines elastischen Verbundbauteils nach Anspruch 1, **dadurch gekennzeichnet, dass** die hängende Lagerung bedeutet, dass die beiden elastischen Teilbauteile (1) mit der hängenden Lagerstruktur durch eine axiale Metallhülse (11) und eine endseitige Metallabdeckung (12) verbunden werden, dann alle Teile durch das Befestigungssystem (13) zusammengefügt werden und sie zusammen an einem Lokomotivmotor (14) befestigt werden, um das elastische Verbundbauteil zu bilden.

6. Verfahren zur Erhöhung der axialen Steifigkeit, Reduzierung der Radial- und Biegesteifigkeit eines elastischen Verbundbauteils nach Anspruch 5, **dadurch gekennzeichnet, dass** die axiale Metallhülse (11) die Innenlöcher der beiden elastischen Teilbauteile (1) durchdringt, an einem Ende der axialen Metallhülse (11) eine Halteschaftschulter (15) angeordnet ist, die Halteschaftschulter (15) gerade mit dem Innenloch des metallischen Seitenrings (8) des einen elastischen Teilbauteils (1) übereinstimmt, ein Spalt (18) zwischen der axialen Metallhülse (11) und dem Innenring des elastischen Teilbauteils (1) gebildet wird, so dass der Seitenring (8) des elastischen Bauteils und der Lokomotivmotor (14) fixiert sind, wenn das elastische Bauteil radial belastet wird, die Last auf den Innenring (9) des elastischen Bauteils wirkt, der mit einer Gewindestange verbunden ist, und der Außenring (7) des elastischen Teilbauteils (1) keine Last trägt und einen hängenden Zustand bildet; das andere Ende der axialen Metallhülse (11) mit der metallischen Endabdeckung (12) verbunden ist und in ein inneres Positionierungsloch der Endabdeckung (12) eingesetzt ist; der metallische Außenring (7) des inneren Positionierungslochs der Endabdeckung (12) ist mit einem Positionierungsvorsprung (19) versehen, und der Positionierungsvorsprung (19) ist in das innere Loch des metallischen Seitenrings (8) der anderen elastischen Unterkomponente (1) eingesetzt, um die elastische Komponente zu positionieren; zwischen der axialen metallischen Hülse (11) und dem metallischen Innenring des anderen elastischen Teilbauteils (1) wird ebenfalls ein Spalt gebildet, so dass der metallische Seitenring (8) des elastischen Bauteils und der Lokomotivmotor (14) fixiert sind, wenn das elastische Bauteil radial belastet wird, die Last auf den Innenring (9) des elastischen Bauteils wirkt, der mit einer Gewindestange verbunden ist, und der Außenring (7) des elastischen Bauteils keine Last trägt, wodurch ebenfalls ein hängender Zustand gebildet wird; das Befestigungssystem (13) durch das innere Loch der Endabdeckung (12) und durch das innere Loch der axialen Hülse hindurchdringt und dann mit einem Verbindungsschraubenloch in einem Drehgestell (17) verbunden ist und die beiden elastischen Komponenten gleichzeitig während der Verdichtung der Endabdeckung (12) axial zusammendrückt, wodurch hängende Aufhängungen der beiden elastischen Komponenten gebildet werden.

7. Verfahren zur Erhöhung der axialen Steifigkeit und zur Verringerung der radialen Steifigkeit und der Durchbiegungssteifigkeit eines elastischen Verbundbauteils nach Anspruch 1, **dadurch gekennzeichnet, dass** das elastische Teilbauteil (1) aus einem Gummimaterial besteht und das Gummimaterial mit dem metallischen Bauteil (3) durch integrale Vulkanisation zu einem Gummi-Metall-Verbundbauteil zusammengefügt wird.

8. Verfahren zur Erhöhung der axialen Steifigkeit und zur Verringerung der radialen Steifigkeit und der Durchbiegungssteifigkeit eines elastischen Verbundbauteils nach Anspruch 1, **dadurch gekennzeichnet, dass** das elastische Teilbauteil (1) aus einem elastischen Nylon- oder Polyestermaterial besteht und das elastische Nylon- oder Polyestermaterial mit dem metallischen Außenring (7), dem metallischen Innenring (9) und dem metallischen Seitenring (8) zu einem elastischen Materialverbundbauteil zusammengefügt wird.

## Revendications

1. Procédé d'augmentation de la rigidité axiale et de réduction de la rigidité radiale et de fléchissement d'un composant composé élastique, dans lequel l'augmentation de la rigidité axiale et la réduction de la rigidité radiale et de fléchissement du composant composé élastique sont réalisées par pré-compression axiale et par une structure de support de charge suspendue de sous-composants élastiques (1) dotés d'une multitude de surfaces libres, dans lequel le sous-composant élastique (1) doté d'une multitude de surfaces libres est un composant élastique composé d'une matière élastique (2) et de composants métalliques (3), dans lequel le sous-composant élastique (1) présente trois surfaces libres après avoir été composé, dans lequel toutes les surfaces libres s'étendent selon des angles différents et à des positions différentes pour assurer le relâchement des tensions lorsque le sous-composant en matière élastique (1) est sollicité dans plusieurs directions, de sorte que les tensions des sous-composants élastiques (1) sont substantiellement réduites dans toutes les directions, et la durée de vie des sous-composants élastiques (1) est prolongée ; la pré-compression axiale signifie que les sous-composants élastiques (1) sont toujours dans un état comprimé axialement pendant le travail, de sorte que la rigidité axiale est substantiellement augmentée ; la structure de support suspendue signifie que l'un au moins des composants métalliques (3) du sous-composant élastique (1) est dans un état suspendu pendant le travail, de sorte que le composant métallique (3) ne supporte pas la charge dans la direction radiale d'une part, et donc la matière élastique (2) à cette position est dans un état de cisaillement complètement et ne fournit qu'une très faible rigidité radiale et de fléchissement, d'autre part, le composant métallique suspendu (3) supporte la charge dans la direction axiale et contribue grandement à la rigidité axiale, augmentant ainsi la rigidité axiale tout en réduisant la rigidité radiale et de fléchissement du composant composé élastique, **caractérisé en ce que** les trois surfaces libres des sous-composants élastiques (1) sont formées par des espaces formés par combinaison d'une bague extérieure métallique (7), d'une bague latérale métallique (8) et d'une bague intérieure métallique (9) ; dans lequel la première surface libre est une surface libre extérieure (4) dans la direction du diamètre extérieur, formée par l'espace formé par combinaison de la bague extérieure métallique (7) et de la bague latérale métallique (8), la deuxième surface libre est une surface libre intérieure (5) dans la direction du diamètre intérieur, formée par l'espace formé par combinaison de la bague latérale métallique (8) et de la bague intérieure métallique (9), et la troisième surface libre est une surface libre inclinée (6) dans une direction angulaire inclinée, formée par l'espace formé par combinaison de la bague intérieure métallique (9) et de la bague extérieure métallique (7).

2. Procédé d'augmentation de la rigidité axiale et de réduction de la rigidité radiale et de fléchissement d'un composant composé élastique selon la revendication 1, **caractérisé en ce que** la section du sous-composant élastique (1) entre la surface libre inclinée (6) et la surface libre intérieure (5) est une structure sphérique, et forme un composant élastique sphérique conjointement avec la bague extérieure métallique (7), la bague intérieure métallique (9) et la bague latérale métallique (8), par conséquent capable de réduire substantiellement la rigidité de fléchissement.

3. Procédé d'augmentation de la rigidité axiale et de réduction de la rigidité radiale et de fléchissement d'un composant composé élastique selon la revendication 1, **caractérisé en ce que** la structure de la matière élastique (2) entre la surface libre inclinée (6), la surface libre intérieure (5) et la surface libre extérieure (4) est une structure élastique en forme de Y, pour répondre aux exigences de rigidité axiale rigide et de rigidité axiale souple de composants élastiques dans divers systèmes de bogies.

4. Procédé d'augmentation de la rigidité axiale et de réduction de la rigidité radiale et de fléchissement d'un composant composé élastique selon la revendication 1, **caractérisé en ce que** le composant composé élastique et pré-comprimé axialement est formé en combinant deux sous-composants élastiques (1) ; les deux sous-composants élastiques (1) sont pré-comprimés axialement et serrés sur un bogie (17) par les deux côtés du bogie (17), et sont pré-comprimés axialement et combinés ensemble par un système de fixation (13), pour former le composant composé élastique pré-comprimé axialement.

5. Procédé d'augmentation de la rigidité axiale et de réduction de la rigidité radiale et de fléchissement d'un composant composé élastique selon la revendication 1, **caractérisé en ce que** le support de charge suspendu signifie que les deux sous-composants élastiques (1) avec la structure de support de charge suspendue sont combinés à l'aide d'un manchon métallique axial (11) et d'un couvercle métallique d'extrémité (12), puis toutes les pièces sont assemblées à l'aide du système de fixation (13) et fixées ensemble à un moteur de locomotive (14) pour former le composant composé élastique.

6. Procédé d'augmentation de la rigidité axiale et de réduction de la rigidité radiale et de fléchissement d'un composant composé élastique selon la revendication 5, **caractérisé en ce que** le manchon métallique axial (11) pénètre à travers les trous intérieurs des deux sous-composants élastiques (1), un épaulement d'arbre de retenue (15) est disposé à une extrémité du manchon métallique axial (11), l'épaulement d'arbre de retenue (15) est simplement adapté au trou intérieur de la bague latérale métallique (8) d'un sous-composant élastique (1), un espace (18) est formé entre le manchon métallique axial (11) et la bague intérieure du sous-composant élastique (1),
de telle façon que la bague latérale (8) du composant élastique et le moteur de locomotive (14) sont fixés lorsque le composant élastique est chargé radialement, la charge agit sur la bague intérieure (9) du composant élastique reliée à une tige de vis, et la bague extérieure (7) du sous-composant élastique (1) ne supporte aucune charge, formant un état suspendu ;
l'autre extrémité du manchon métallique axial (11) est reliée au couvercle métallique d'extrémité (12) et insérée dans un trou intérieur de positionnement du couvercle d'extrémité (12) ; la bague extérieure métallique (7) du trou intérieur de positionnement du couvercle d'extrémité (12) est pourvue d'un bossage de patte de positionnement (19), et le bossage de patte de positionnement (19) est inséré dans le trou intérieur de la bague latérale métallique (8) de l'autre sous-composant élastique (1), pour positionner le composant élastique ;
un espace est également formé entre le manchon métallique axial (11) et la bague intérieure métallique de l'autre sous-composant élastique (1), de sorte que la bague latérale métallique (8) du composant élastique et le moteur de locomotive (14) sont fixés lorsque le composant élastique est chargé radialement, la charge agit sur la bague intérieure (9) du composant élastique reliée à une tige de vis, et la bague extérieure (7) du composant élastique ne supporte aucune charge, formant également un état suspendu ; le système de fixation (13) pénètre à travers le trou intérieur du couvercle d'extrémité (12), à travers le trou intérieur du manchon axial, puis est relié à un trou de vis de raccordement dans un bogie (17),
et comprime axialement les deux composants élastiques simultanément pendant le compactage du couvercle d'extrémité (12), formant des crochets suspendus des deux composants élastiques.

7. Procédé d'augmentation de la rigidité axiale et de réduction de la rigidité radiale et de fléchissement d'un composant composé élastique selon la revendication 1, **caractérisé en ce que** le sous-composant élastique (1) est constitué d'une matière en caoutchouc, et la matière en caoutchouc est combinée avec le composant métallique (3) par vulcanisation intégrale, formant un composant composé d'une matière caoutchouc-métal.

8. Procédé d'augmentation de la rigidité axiale et de réduction de la rigidité radiale et de fléchissement d'un composant composé élastique selon la revendication 1, **caractérisé en ce que** le sous-composant élastique (1) est constitué de nylon ou d'une matière élastique à base de polyester, et le nylon ou la matière élastique à base de polyester est combiné avec la bague extérieure métallique (7), la bague intérieure métallique (9) et la bague latérale métallique (8) ensemble, formant un composant composé d'une matière élastique.
